# EUROPEAN PATENT APPLICATION

(11) **EP 4 450 805 A1**
(43) Date of publication of application: **23.10.2024**
(21) Application number: 23168964.7
(22) Date of filing: 20.04.2023
(51) Int. Cl.: F03D 9/19, F03D 80/60, F03D 80/70, F16L 27/00

(54) **WIND TURBINE WITH AT LEAST PART OF A HYDROGEN PRODUCTION SYSTEM**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

A wind turbine is provided that comprises a wind turbine tower (103), a nacelle (10) rotatably mounted to the wind turbine tower (103), wherein the nacelle (10) comprises at least part of a hydrogen production system (30), and a flow connection (52) for a fluid from the wind turbine tower (103) to the part of the hydrogen production system (30) in the nacelle (10). The flow connection (61) comprises a rotatable flow coupling (61), wherein the rotatable flow coupling (61) comprises: a first annular element (63) fixedly mounted to the wind turbine tower (103), and a second annular element (64) fixedly mounted to the nacelle (10), wherein the second annular element (64) is rotatably connected to the first annular element (63) and wherein the rotatable flow coupling (52) has a rotation axis (B) that is coincident with the rotation axis of the nacelle (A).

## Description

### FIELD OF THE INVENTION

The present invention relates to a wind turbine with at least part of a hydrogen production system and to a method of operating a respective wind turbine.

### BACKGROUND

In order to be capable of storing electric power generated by wind turbines and to provide a different means of distributing the generated power, the conversion of the generated power into hydrogen gas, for example by electrolysis, is being considered.

For this purpose, it is known to place hydrogen production equipment on a separate platform of an offshore windfarm. Such placement is beneficial, as it allows the use of conventional wind turbine configurations and electrical connections. However, losses due to electrical power conversion and transport are significant. It is thus desirable to reduce such losses.

The placement of hydrogen production components directly at the wind turbine has been considered. However, such configurations still face technical challenges, in particular with respect to conducting the fluids of such system.

### SUMMARY

Accordingly, there is a need to mitigate at least some of the drawbacks mentioned above and to provide improved solutions for transporting fluids in such system.

This need is met by the features of the independent claims. The dependent claims describe embodiments of the invention.

According to an embodiment of the invention, a wind turbine is provided that comprises a wind turbine tower, a nacelle arranged rotatably on the wind turbine tower, wherein the nacelle comprises at least part of a hydrogen production system, and a flow connection for a fluid from the wind turbine tower to the part of the hydrogen production system in the nacelle. The flow connection comprises a rotatable flow coupling, wherein the rotatable flow coupling comprises: a first annular element fixedly mounted to the wind turbine tower, and a second annular element fixedly mounted to the nacelle. The second annular element is rotatably connected to the first annular element, and the rotatable flow coupling has a rotation axis that is coincident with the rotation axis of the nacelle.

When the nacelle rotates, the second annular element of the rotatable flow coupling is rotating with the nacelle. Thus, fluid conduits of the flow connection which are connected to the first and/or second annular element are not twisted when the nacelle rotates. Therefore, there is no torsional stress on the fluid conduits which are connected to the rotatable flow coupling.

The flow connection may comprise the rotatable flow coupling (and the misalignment flange if provided) and at least one conduit, wherein a first part of the conduit is connected to the first annular element and a second part of the conduit is connected to the second annular element such that a fluid can be guided between the tower and the nacelle via the flow coupling.

The first and second annular elements are preferably sealingly connected to each other. Thus, no leakage can occur when a fluid is guided through the rotatable flow coupling, in particular during rotation of the second annular element against the first annular element.

The first and/or second annular element is(are) preferably connected to the wind turbine tower by fasteners, for example screws.

Alternatively, the second annular element is rotatably connected to the first annular element and only has a connection to the nacelle by flow conduits which are connected at one end to the part of the hydrogen production system and at the other end to the second annular element of the rotatable flow coupling and in particular to a connection port of the second annular element. I.e. the second annular element does not necessarily be connected to the nacelle by e.g. screws or the like.

Preferably, the rotatable flow coupling comprises a ring-shaped body comprising or formed by the first and second annular elements. The ring-shaped body may extend around a space, so that other elements of the wind turbine can reach through this space, such as the tower, or elements within the tower, e.g. cable, lifting arrangement, ladder or the like. Preferably the ring-shaped body has a circular shape.

An inner diameter of the ring-shaped body may be in the range between 1.0-4.5 m, 1.3-4.0 m, 1.6-3.5 m, 1.8-3,0 m or 2.0-2.5 m.

In one implementation, the rotatable flow coupling may be arranged outside of the wind turbine tower such that the first and second annular elements surround the wind turbine tower or an extension thereof. Thus, the space within the wind turbine tower, and in particular in the center of the wind turbine tower, is saved and can be used for other elements such as cables, lifting arrangement etc. or for the transport of component between the wind turbine tower and the nacelle of the wind turbine.

Alternatively, the rotatable flow coupling may be arranged within an inner space of the wind turbine tower or an extension thereof.

Preferably, the rotatable flow coupling is arranged in vertical direction within a predetermined distance range above and below a yaw bearing of the wind turbine that rotatably connects the nacelle with the wind turbine tower. For example, the distance range is from 2 or 1 m below to 1 or 2 m above the yaw bearing. The extension thereof may be a portion of the wind turbine tower that extends into the nacelle.

The first and second annular elements may enclose between them a chamber forming at least one annular flow channel from the wind turbine tower to the nacelle, wherein the annular flow channel is arranged coaxially to the rotation axis of the rotatable flow coupling.

The part of the hydrogen production system may at least comprise an electrolyzer configured to receive electrical power from an electrical power generation system of the wind turbine and being arranged in or at the nacelle. Preferably, the rotatable flow coupling comprises at least one annular flow channel configured to guide water to the electrolyzer or to guide hydrogen or a hydrogen/water mixture from the electrolyzer to the base of the wind turbine tower. In one implementation, the rotatable flow coupling comprises a first annular flow channel configured to guide water to the electrolyzer, and a second annular flow channel configured to guide hydrogen or a hydrogen/water mixture from the electrolyzer to the base of the wind turbine tower.

The rotatable flow coupling may comprise at least two, three, or four annular flow channels, wherein each annular flow channel is configured to guide a fluid from the wind turbine tower to the part of the hydrogen production system in the nacelle or vice versa, wherein preferably, the annular flow channels of the rotatable flow coupling are arranged coaxially with the rotation axis of the rotatable flow coupling. In particular, the annular flow channels are arranged in a shell-like manner, i.e. the flow channels enclose each other circumferentially. Alternatively, the flow connection may comprise at least two of the rotatable flow couplings each having the first and second annular elements, wherein the flow couplings are arranged nested within each other.

Preferably, the chamber enclosed by the first and second annular elements comprises the at least two, three or four annular flow channels.

In particular, the flow connection comprises a conduit having a first part which is fluidically connected to a component of the hydrogen production system at or within the wind turbine tower or at the base of the wind turbine tower, wherein the opposite end of the first part is connected to the first annular element, and a second part which is fluidically connected to the part of the hydrogen production system at the nacelle, wherein the opposite end of the second part is connected to the second annular element. Thus, the rotatable flow coupling fluidically connects the first and second parts of a conduit forming part of the flow connection such that a fluid can be guided along the conduit via the rotatable flow coupling from the base of the wind turbine tower to the nacelle or vice versa. In case at least two annular flow channels are provided, a conduit is provided for each annular flow channel, wherein each conduit has a first part and a second part connected by one of the annular flow channels of the rotatable flow coupling. Thus different fluids can be transported between the tower and the nacelle via the rotatable flow coupling.

The conduits connected via the flow coupling are preferably flexible conduits, but may also be rigid conduits.

Preferably, the rotatable flow coupling comprises one or a combination of: an annular flow channel configured to guide water from the wind turbine tower to the electrolyzer of the hydrogen production system at the nacelle, an annular flow channel configured to guide hydrogen or a hydrogen/water mixture from the electrolyzer of the hydrogen production system at the nacelle to the wind turbine tower, an annular flow channel configured to guide a cooling fluid from the wind turbine tower to the electrolyzer, and an annular flow channel configured to guide a cooling fluid from the electrolyzer to the wind turbine tower.

For example, the rotatable flow coupling comprises the first and second annular flow channels and the first annular flow channel is configured to guide water from the wind turbine tower to the part of the hydrogen production system (and in particular to the electrolyzer) at the nacelle, and the second annular flow channel is configured to guide hydrogen or a hydrogen/water mixture from the part of the hydrogen production system (in particular from electrolyzer) at the nacelle to the wind turbine tower.

The rotatable flow coupling may further comprise a third and fourth annular flow channel, wherein the third annular flow channel may be configured to guide a cooling fluid from the wind turbine tower to the electrolyzer, and the fourth annular flow channel may be configured to guide the cooling fluid from the electrolyzer to the wind turbine tower.

The wind turbine may further comprise at least one annular sealing elements which is arranged between the first and second annular elements coaxially to the rotation axis of the rotatable flow coupling, wherein the at least one annular sealing element is configured to provide a fluid tight rotatable seal between the first annular element and the second annular element.

The wind turbine may comprise two or more sealing elements. In particular, when the flow coupling comprises at least two annular flow channels, at least one sealing element is provided for each of the annular flow channels. Thus, fluid exchange between the respective annular flow channel is prevented, in particular during rotation of the second annular element against the first annular element.

For example the sealing element is arranged between an inner radial edge of the outer annular element and outer radial edge of inner radial element. In another example, the sealing element is arranged between facing edges forming an outer diameter of the first and second annular elements and between facing edges forming an inner diameter of the first and second elements. In another example, the sealing element is arranged between the annular edges of an annular element with U-shaped cross section and the annular edges of a ring-shaped annular element.

Preferably, the rotatable flow coupling comprises at least one annular flow channel, wherein each of the at least one annular flow channel comprises a first connection port arranged at the first annular element and being fluidically connected to the respective annular flow channel and a second connection port arranged at the second annular element and being fluidically connected to the respective annular flow channel so as to enable a fluid flow between the first and second connection ports.

A first part of a conduit may be connected to the first connection port of the annular flow channel and a second part of the conduit may be connected to the second connection port of the annular flow channel. For example, the flow connection comprises the water supply conduit, and the first part of the water supply conduit is connected to the first connection port and the second part of the water supply conduit is connected to the second connection port. Thus, water can be guided through the rotatable flow coupling via the annular flow channel.

Preferably, the flow connection comprises at least one of or a combination of: a water supply conduit configured to supply water from the base of the wind turbine tower to an electrolyzer of the part of the hydrogen production system via the rotatable flow coupling, a hydrogen return conduit configured to provide hydrogen from a separator of the part of the hydrogen production system to the base of the wind turbine tower or a hydrogen/water mixture from an electrolyzer of the part of the hydrogen production system to a separator of the hydrogen production system at the base of the wind turbine tower via the rotatable flow coupling, and a closed loop cooling conduit of a closed loop cooling circuit configured to circulate via the rotatable flow coupling, a cooling fluid between an electrolyzer of the part of the hydrogen production system and the base of the wind turbine tower, and wherein the closed loop cooling circuit is configured to cool the electrolyzer.

At least one or more of the water supply conduit, the hydrogen return conduit and the closed loop cooling conduit may extend at least partially through the wind turbine tower and/or the nacelle (e.g. nacelle housing). If the rotatable flow coupling is arranged outside of the wind turbine tower, at least a part of each conduit may extend outside of the wind turbine tower and/or the nacelle.

Preferably each of the water supply conduit, the hydrogen return conduit and/or the closed loop cooling conduit comprises at least one conduit having a first part connected to a component of the hydrogen production system at or within the wind turbine tower and a second part connected to the part of the hydrogen production system at the nacelle, wherein the rotatable flow coupling connects the first and second part with each other. Thus, a fluid can flow between the first and second part of each of the conduits via the rotatable flow coupling.

For example, the flow connection comprises the water supply conduit and the hydrogen return conduit, and the rotatable flow coupling comprises a first annular flow channel and a second annular flow channel, wherein the first part and the second part of the water supply conduit are connected via the first annular flow channel of the rotatable flow coupling and the first part and the second part of the hydrogen return conduit are connected via the second annular flow channel of the rotatable flow coupling.

The part of the hydrogen production system comprised by the nacelle may comprise at least an electrolyzer configured to receive electrical power from an electrical power generation system of the wind turbine, wherein the electrolyzer is preferably arranged within a nacelle housing of the nacelle or mounted to the nacelle outside of the nacelle housing. The nacelle may comprise a nacelle housing configured to house at least part of the electrical power generation system of the wind turbine; and wherein preferably said part of the electrical power generation system comprises a generator of the wind turbine configured to generate electrical power from rotation of a wind turbine rotor, and/or an AC to DC power converter configured to supply DC electrical power to the electrolyzer.

One or more other components of the hydrogen production system may be arranged at a base of the wind turbine tower and/or within the wind turbine tower. Preferably, the hydrogen production system may comprise at least one or a combination of a gas/liquid separator configured to receive a gas/liquid output from the electrolyzer, a desalination unit configured to desalinate seawater and to provide desalinated water to the electrolyzer, a pump arrangement configured to pump water from the base of the wind turbine tower to the electrolyzer in the nacelle, a gas dryer unit, a gas purification unit (in particular for treating produced gas), a cooling pump arrangement configured to circulate a cooling fluid (e.g. glycol) between the base of the wind turbine tower and the electrolyzer, a compressor unit configured to compress gas produced by the electrolyzer (e.g. for transporting the gas onshore or into a storage tank on the wind turbine or on a floating vessel), a water treatment unit which may be configured to filter and/or sterilize water (prior and/or after desalination), and electrical power and/or control equipment of the hydrogen production system.

Alternatively, one or more components of the hydrogen production system such as the gas/liquid separator may be arranged at the nacelle.

The wind turbine may include a platform arranged at the base of the wind turbine tower. The components of the hydrogen production system (except the electrolyzer) may be arranged on the platform and/or within the wind turbine tower. The platform may in particular be an offshore platform that may be supported by the same support structure (e.g. foundation) that supports the wind turbine tower. It may in particular be arranged above sea level, and it may be a so-called service platform.

For example, at least the desalination unit, the gas/liquid separator, and the water treatment unit may be arranged on the platform. Preferably, the pump arrangement, and electrical power and control equipment may further be arranged on the platform. The components may be provided in respective containers, and the containers may be arranged on the platform. A component may be provided in its own container, two or more components may be provided in the same container, or a component may be distributed across two or more containers. Such containers may for example be standardized freight containers, such as shipping freight containers, in particular a sea-freight container or ISO-container. The container may for example be a series 1 freight-container in accordance with ISO668:2013. The pump arrangement may include a pump at the level of the platform, but may include further pumps, e.g. the above-mentioned submerged pump or a pump higher up within the wind turbine tower.

The containers may be arranged on the platform around the wind turbine tower. Containers may for example be arranged on at least two, preferably three sides of the wind turbine tower. Efficient use of the space available on the platform may thus be made.

The base of the wind turbine tower may refer to the lower part of the wind turbine tower arranged above the sea level. The base may in particular be an area of the tower close to or next to the support structure (foundation) of the wind turbine (e.g. the end of the tower at which the tower is mounted to the support structure, e.g. at a tower flange), for example close to but above the water surface. It should be clear that in some examples, the tower may also extend to below the sea level. The wind turbine may be an offshore wind turbine. The wind turbine may be supported by a support structure, such as a jacket, a monopile, a gravity-based support structure or a floating foundation. The wind turbine may further include a storage tank for storing produced gas, e.g. hydrogen tank, which may be arranged on the platform, in the support structure, in the wind turbine tower, and/or the like.

In an embodiment, the nacelle housing includes a surrounding outer wall that confines an inner volume inside the nacelle housing. The part of the electrical power generation system and the electrolyzer may be arranged within this inner volume. The nacelle housing may in particular be formed by one cuboid or semi-ellipsoidal body. A generator of the power generation system may be arranged within the nacelle housing, or may have a separate generator housing that may be mounted to one side of the nacelle housing or that may form one face or wall of the nacelle housing. The wind turbine may comprise the electrical power generation system.

The electrolyzer may comprise plural electrolyzer stacks, which may be connected electrically in different ways, for example in series (for high-voltage supply levels) or in parallel (for lower voltage supply levels). The nacelle may include a support structure that provides at least two support levels arranged one on top of the other, and each support level may support at least one electrolyzer stack. A relatively large number of electrolyzer stacks may thus be arranged within a relatively small space inside the nacelle. Two, three, four or more support levels may be provided, for example in the form of respective floor racks or different floorings.

The wind turbine may further comprise a controller configured to control an activation and deactivation of electrolyzer stacks of the electrolyzer in dependence on an amount of electrical power and/or a voltage level generated by the electrical power generation system. The controller may accordingly switch on or off electrolyzer stacks (which may be provided in form of modules) to control the load applied to the power generation system. For example, respective switches may be actuated to connect or disconnect an electrolyzer stack from the power generation system.

The wind turbine may further comprise an auxiliary power connection extending in the wind turbine tower for providing auxiliary electrical power from a platform of the wind turbine to one or more auxiliary components in the nacelle, and/or for providing electrical power generated by the electrical power generation system of the wind turbine to one or more electrical consumers on a platform of the wind turbine (such as to the other components of the hydrogen production system).

In some implementations, the wind turbine may only be configured to produce hydrogen gas, and may not export any generated electrical power. In other configurations, the wind turbine may provide both, hydrogen production and export of generated electrical power. Preferably, generated electrical power is only used to power the hydrogen production system and possibly to power auxiliary consumers of the wind turbine, but not for electrical power export.

According to a further embodiment of the invention a method of operating a wind turbine is provided. The wind turbine comprises: a wind turbine tower, a nacelle rotatably mounted to (or arranged on) the wind turbine tower, wherein the nacelle comprises at least part of a hydrogen production system, and a flow connection for a fluid from the wind turbine tower to the part of the hydrogen production system in the nacelle, wherein the flow connection comprises a rotatable flow coupling, and wherein the rotatable flow coupling comprises: a first annular element fixedly mounted to the wind turbine tower, and a second annular element fixedly mounted to the nacelle, wherein the second annular element is rotatably connected to the first annular element, and wherein the rotatable flow coupling has a rotation axis that is coincident with the rotation axis of the nacelle. The method comprises: operating the part of the hydrogen production system, wherein a fluid is guided in the flow connection via the rotatable flow coupling from the wind turbine tower to the nacelle and/or vice versa.

By such method, a wind turbine may be operated that has advantages corresponding to those described further above. In particular, fluids can be guided between the wind turbine tower and the nacelle without damaging the conduits guiding said fluids.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine according to an embodiment.
Fig. 2 is a schematic drawing showing a nacelle of a wind turbine according to an embodiment.
Fig. 3 is a schematic drawing showing a sectional side view of a rotary union arranged at the top of the wind turbine tower according to an embodiment.
Fig. 4 is a schematic drawing showing the rotary union of Fig. 3 from a top view without the nacelle.
Fig. 5 is a schematic drawing showing the misalignment flange of Fig. 4 in detail.
Fig. 6 is a schematic drawing showing a perspective view of a rotary union according to an embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

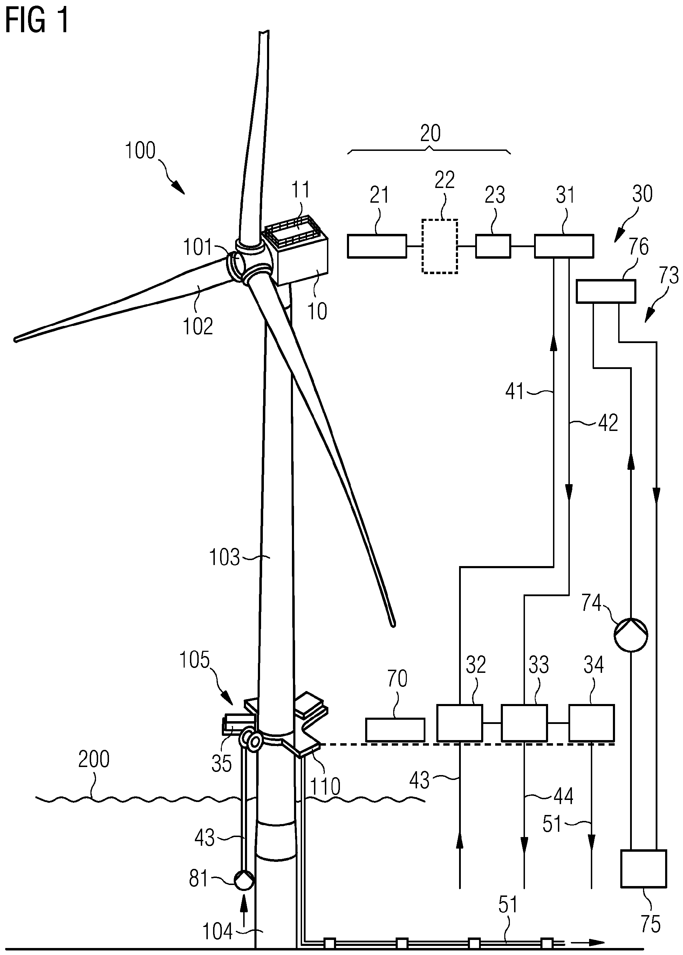

Fig. 1 schematically illustrates a wind turbine 100 comprising a nacelle 10 and a wind turbine rotor 101 with rotor blades 102. Nacelle 10 is mounted on top of a wind turbine tower 103, which is supported by a support structure (foundation) 104, which may be a bottom-fixed foundation, such as a monopile, a jacket, a gravity-based foundation, or may be a floating foundation. Wind turbine 100 further includes a platform 110 supported by foundation 104 and arranged at a base 105 of the wind turbine tower 103 above a seawater level 200. Wind turbine 100 is an offshore wind turbine and may form part of an offshore wind park comprising plural corresponding wind turbines, and optionally conventional wind turbines.

Wind turbine 100 comprises an electrical power generating system 20 that includes a generator 21, and that may further comprise a transformer 22 and a power converter 23. It may further comprise a distribution bus or distribution cable system for distributing generated electrical power to plural electrolyzer stacks of an electrolyzer 31, as explained in more detail further below.

Wind turbine 100 further comprises a hydrogen production system 30 that includes an electrolyzer 31 and one or more other components 32, 33, 34. At least part of the power generation system 20 and the electrolyzer 31 are arranged and installed within a housing 11 of the nacelle 10. Electrolyzer 31 is supplied with electrical power from generator 21 either directly or via the AC/DC converter 23 and/or the transformer 22, depending on the configuration. Transformer 22 is optionally provided for adjusting the voltage level to the voltage level required by electrolyzer 31, which is generally a low-voltage level below 2000 V, so that transformer 22 may be a low-voltage-to-low-voltage transformer. AC-to-DC converter 23 may be provided if such conversion is necessary and may be implemented as a passive rectifier or an actively controlled rectifier. A control system including a wind turbine controller and a converter controller (not shown) may be provided in wind turbine 100.

The hydrogen production system 30 may comprise a water treatment system 32 which may include a desalination unit, and may further include a treatment unit that may comprise one or a combination of a purification unit, a sterilization unit, a filtration unit, a demineralization unit and the like. A water intake module 35 may be provided and via a seawater intake 43, seawater may be taken up (by using a pump 81, e.g. a submersible pump), treated, and provided as clean water via a water supply conduit 41 to the electrolyzer 31. Using electrical power generated by power generation system 20, the electrolyzer 31 produces hydrogen gas by electrolysis of the supplied clean water and provides a gas/liquid mixture via a gas/liquid return conduit 42 to the gas/liquid separator 33. Water separated from the gas may be discharged via water outlet 44 or may be provided to treatment system 32. Optionally, a compressor unit 34 may be provided as part of the hydrogen production system 30 to compress the produced hydrogen gas. The hydrogen gas may be exported via an export conduit 51, which can for example be a pipeline leading to an onshore site. In other implementations, produced hydrogen gas may be stored in a tank, which may be located on platform 110, in tower 103, in foundation 104, or on a floating vessel. The water supply conduit 41 and the gas/liquid return conduit 42 may extend at least partially, within the wind turbine tower 103, from the base of the wind turbine tower 103 to the nacelle 10.

The gas/liquid separator 33 may also be arranged at or within the nacelle 10. In this case the export conduit 51 preferably extends from the nacelle 10, within the wind turbine tower 103, to the base of the wind turbine tower 103 and is for example further exported via a pipeline to an onshore site. Thus, in this case no gas/liquid mixture but hydrogen gas which is already separated from the water is guided through the wind turbine tower 103.

The treatment system 32, the gas liquid separator 33 and optionally the compressor unit 34 form part of the hydrogen production system 30 and are preferably located on the platform 110, i.e. they are not located in nacelle 10. A further water purification unit, such as a filter, may be provided at the top of tower 103 or in nacelle 10 in order to ensure the purity of the water supplied to electrolyzer 31, yet this is optional. Accordingly, all of the components of the hydrogen production system 30 except the electrolyzer 31, the optional purification unit (not shown) and the required electrical connections (including control connections and supply connections) and the flow conduits may be arranged outside the nacelle 10 and in particular at the base 105 of wind turbine tower 103, more specifically on the platform 110 or within the tower 103. Nacelle 10 may thus be compact and light-weight. Further, as part of the power generation system 20 and the electrolyzer 31 are provided within housing 11 of nacelle 10 (or alternatively at an outer surface of the nacelle 11 which is not shown), large diameter electrical power cables can be provided to supply power to electrolyzer 31, as these cables do not need to be twisted (e.g. during yawing of the nacelle) and can provide a high-current direct connection. The efficiency may thereby be improved. Further, since the wind turbine 100 exports hydrogen gas, no costly subsea cables are required for transporting the generated energy to an onshore site.

Further, the wind turbine may comprise a closed loop cooling conduit of a closed loop cooling circuit 73 which is configured to cool the electrolyzer 31. The closed cooling circuit 73 may comprise a heat exchanger 76 arranged at the nacelle 10 and being configured to exchange heat with the electrolyzer 31 and a heat exchanger 75 arranged at the base of the wind turbine tower, wherein a cooling fluid such as e.g. glycol, is circulated, by using a pump 74, between the heat exchangers 75, 76. The cooling fluid is guided through the heat exchanger 76 and extracts heat from the electrolyzer wherein the cooling fluid is heated (i.e. the electrolyzer is cooled by the cooling fluid). The heated cooling fluid is guided through the heat exchanger 75 at the base, which may be a subsea heat exchanger arranged below the sea water level for exchanging heat with the sea water or an air heat exchanger, and releases the heat. In this way, heat generated at the electrolyzer 31 can be removed and the electrolyzer 31 can be cooled. This makes it possible to keep the operating temperature of the electrolyzer 31 at a certain value, preferably at a value at which the operating efficiency of the electrolyzer 31 is highest.

The water supply conduit 41, the gas/liquid return conduit 42 and the closed loop cooling conduit of the closed loop cooling circuit 73 may extend from the base of the wind turbine tower 103 to the nacelle 10, wherein each conduit comprises a first and a second part. The first part is connected to a component of the hydrogen production system 30 at the base of the tower or within the tower and the second part is connected to the part of the hydrogen production system 30 at the nacelle 10. The first and second parts of each conduit are fluidically connected between the tower and the nacelle by a rotatable flow coupling 61 (further described below).

For the purpose of illustration, elements shown on the lefthand side of Fig. 1 are again schematically shown on the right-hand side of the figure; these elements designated by the same reference numerals are the same elements and they may not be present in duplicate. Rather, they are arranged within the nacelle 10 or on platform 110, as described herein.

Wind turbine 100 may be configured to provide no electrical power output to any power grid, i.e. the generated electrical power may be entirely used by electrolyzer 31 for hydrogen production, except for power required to power components of hydrogen production system 30 and/or auxiliary components of wind turbine 100. However, there may still be an auxiliary electrical connection provided to a power grid or other power source, such as a wind farm grid, to supply such components of the hydrogen production system and/or auxiliary components of the wind turbine with electrical power, for example in case of low-wind conditions or no electrical power being produced by power generation system 20. A respective auxiliary module 70 may be provided, which may for example include a step-down transformer unit and a switch gear unit (not shown). It should be clear that Fig. 1 does not illustrate all components that can be comprised in the wind turbine 100, and in particular in the hydrogen production system 30, but further components may be present as described further below.

As wind turbine 100 may be configured to not export electrical power, the nacelle 10 may not comprise any respective DC-to-AC converter (which conventionally forms part of a back-to-back converter to provide the required AC frequency of the grid into which the power is fed) and may further not comprise a respective step-up transformer that provides the voltage level of either the collector grid into which the power is fed or of the power grid, which is typically above 2000 V, in particular above 10.000 V. Space and weight may thus be saved in nacelle 10, so that the size of nacelle 10 may be maintained even though electrolyzer 31, which can include plural stacks, is arranged inside nacelle 10.

Auxiliary components of wind turbine 100 may for example comprise a wind turbine controller, a yaw drive, pitch drives, lights, service equipment such as cranes or lifts, communication equipment, cooling equipment and/or the like. Such auxiliary components of the wind turbine may accordingly be supplied with electric power via power generation system 20 and/or via auxiliary module 70. Additionally or alternatively, wind turbine 100 may include a backup storage, which may include a fuel cell that may convert produced hydrogen into electrical energy, or a battery storage system, such as a backup UPS (uninterruptable power supply).

Gas export pipe 51 may for example lead into a gas grid, e.g. a gas collection system of the wind farm. Platform 110 may be located close to or at a tower flange of wind turbine tower 103.

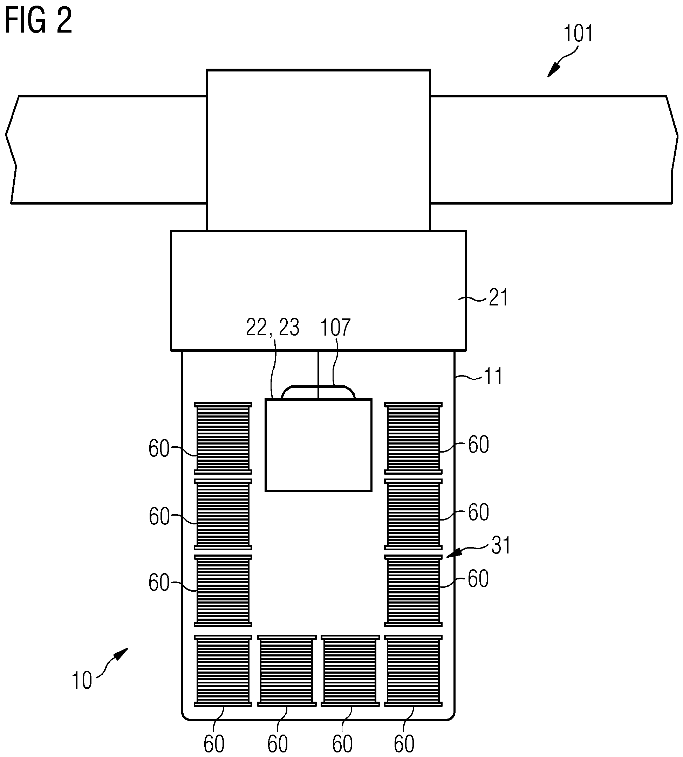

Fig. 2 illustrates a particular implementation of wind turbine 100, wherein nacelle 10 has a cuboid shape, wherein generator 21 (which may be a direct drive generator) is arranged on one side of the nacelle housing. A separate generator housing may be provided, or the nacelle housing 11 may extend to include the generator 21, or the generator housing 21 may form part or all of a sidewall of the nacelle housing 11. Other configurations are certainly conceivable, and nacelle housing 11 may for example have a semi-ellipsoidal shape, or any suitable shape. As schematically illustrated in Fig. 2, two or more electrolyzer stacks 60 forming part of the electrolyzer 31 are arranged within the nacelle housing 11. Nacelle housing 11 may in particular be one single housing that houses both, the electrolyzer 31 and at least part, or all of the power generation system 20. If provided, the transformer 22 and/or the power converter 23, and preferably the distribution bus or distribution cables of the power generation system 20 are comprised within the same nacelle housing 11 as the electrolyzer 31.

The electrolyzer stacks 60 may be connected in series, or they may be connected in parallel. The type of connection can be chosen in accordance with the output voltage level of the power generation system 20 and the input voltage level of the electrolyzer stacks. By an appropriate configuration, no transformer 22 may be required. The wind turbine tower 103 may comprise an upper opening 107. The electrolyzer stacks 60 are preferably arranged around the upper opening 107.

In the above Figs. 1 and 2 an embodiment is shown in which the electrolyzer is arranged within the nacelle 10 and in particular within the nacelle housing 11 and the other components of the hydrogen production system 30 are arranged at the base (e.g. on the platform 110) of the wind turbine tower and/or within the wind turbine tower. However, the electrolyzer 31 may also be arranged not within the nacelle 10, but at the nacelle 10 outside the nacelle housing 11, for example at an outer side surface or at a bottom surface of the nacelle housing 11.

The hydrogen production system 30 may comprise one or more of the following components (not shown in the Figures) which are arranged at the base 105 of the wind turbine tower, in particular at the platform 110, within the nacelle or at an outer surface of the nacelle housing 11: a gas dryer unit for drying the generated hydrogen gas, a nitrogen generator for generating nitrogen from the ambient air and purging one or more of the components of the hydrogen production system 30, heat exchanger(s) for removing heat generated during operation of the hydrogen production system, ion exchanger(s) for filtering water before being supplied to the electrolyzer 31, water tank(s) for storing water which is used for operating the electrolyzer, a power storage for storing power for operating the hydrogen production system and in particular the electrolyzer, and a cooling unit for cooling one or more components of the hydrogen production system 30.

In particular, the cooling unit may be arranged in addition or alternatively to the above described closed cooling loop 73.

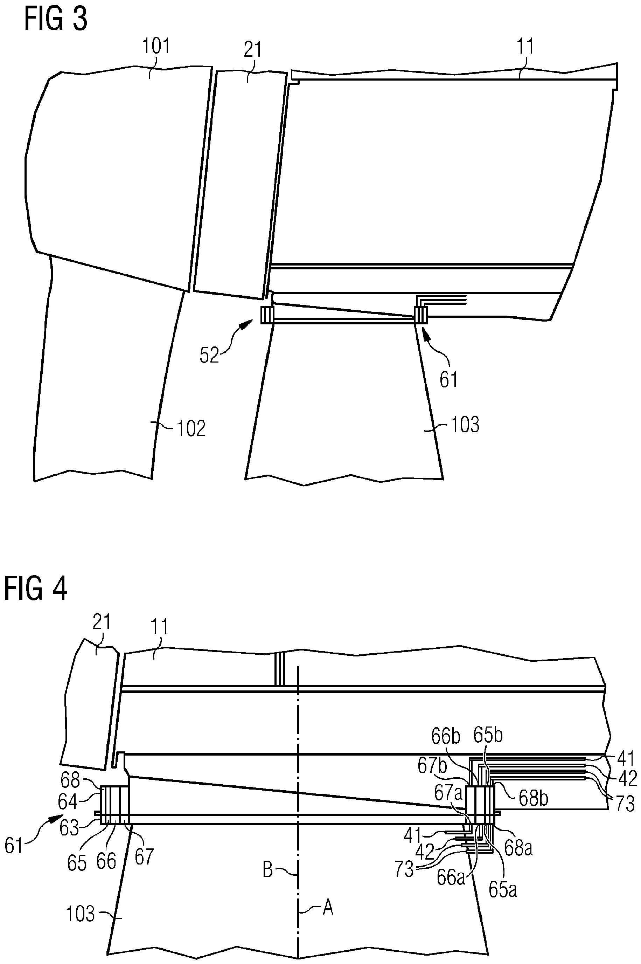

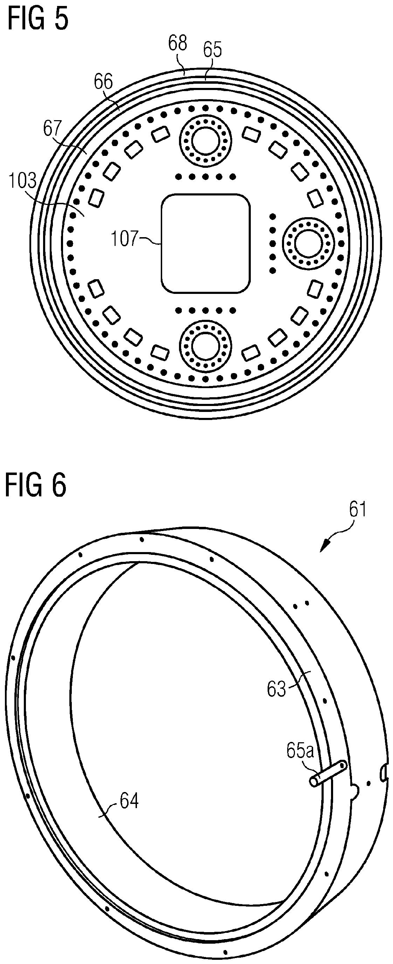

As shown in Fig. 3, the wind turbine 100 comprises a flow connection 52 for guiding a fluid from the wind turbine tower 103 to a part of the hydrogen production system 30 and in particular to the electrolyzer 31 in the nacelle 10, and/or vice versa. The flow connection 52 comprises a rotatable flow coupling 61 having a first annular element 63 fixedly mounted to the wind turbine tower 103, and a second annular element 64 fixedly mounted to the nacelle 10. The second annular element 65 is rotatably connected to the first annular element 64. The first and second annular elements 63, 64 may form a ring-shaped housing 62 (see Fig. 6).

As shown in Fig. 4, the rotatable flow coupling 62 has a rotation axis B that is coincident with the rotation axis A of the nacelle (rotation via a yaw bearing of the wind turbine 100 rotatably connecting the nacelle 10 with the wind turbine tower 103).

Due to the rotatable flow coupling 62, when the nacelle 10 rotates around the axis A, conduit(s) connected to the second annular element 65 (e.g. the outer ring) of the rotatable coupling 62 are not twisted. Thus, damage of the connected conduit(s) can be prevented.

As shown in Figs. 3 and 4, the rotatable flow coupling 62 may be arranged outside of the wind turbine tower 103 such that the first and second annular elements 63, 64 surround the wind turbine tower 103 or an extension thereof. However, the flow coupling 62 may be alternatively arranged within an inner space of the wind turbine tower 103 or an extension thereof.

As shown in Figs. 4 and 5, the first and second annular elements 63, 64 enclose between them a chamber forming a plurality of annular flow channels 65-68, each configured to guide a fluid between the wind turbine tower 103 and the nacelle 10, wherein the annular flow channels 65-68 are arranged coaxially to the rotation axis (B) of the rotatable flow coupling 61. In particular, the rotatable flow coupling 61 shown in Figs. 3 to 5, comprises a first annular flow channel 65 configured to guide water from the wind turbine tower 103 to the electrolyzer 31 of the hydrogen production system at the nacelle, a second annular flow channel 66 configured to guide hydrogen or a hydrogen/water mixture from the electrolyzer 31 of the hydrogen production system at the nacelle to the wind turbine tower 103, a third annular flow channel 67 configured to guide a cooling fluid from the wind turbine tower 103 to the electrolyzer 31, and a fourth annular flow channel 68 configured to guide a cooling fluid from the electrolyzer 31 to the wind turbine tower 103.

Each of the annular flow channels 65-68 comprises a first connection port 65a, 66a, 67a, 68a arranged at the first annular element 63 and being fluidically connected to the respective annular flow channel 65-68 and a second connection port 65b, 66b, 67b, 68b arranged at the second annular element 64 and being fluidically connected to the first annular flow channel 67 so as to enable a fluid flow between the first and second connection ports.

The rotatable flow coupling 61 shown in Figs. 3 to 5 has several annular flow channel, in particular four annular flow channels 65- 68.

However, the number of annular flow channels within the rotatable flow coupling 61 is arbitrary. For example Fig. 6 shows a rotatable flow coupling 61 with only one annular flow channel having a first connection port 65a arranged at the first annular element 63 and a second connection port (not shown) arranged at the second annular element 64.

The rotatable flow coupling may comprise at least one annular sealing element (not shown) which is arranged between the first and second annular elements 63, 64 coaxially to the rotation axis B of the rotatable flow coupling 61, wherein the at least one annular sealing element is configured to provide a fluid tight rotatable seal between the first annular element and the second annular element 63, 64.

The flow connection 52 may comprise one or more of the water supply conduit 41, the hydrogen return conduit 42 and the closed loop cooling conduit of the closed loop cooling circuit 73. A first part of the water supply conduit 41 connected to the hydrogen production system 30 at the base of the wind turbine tower and a second part of the water supply conduit 41 connected to the part of the hydrogen production system 30 at the nacelle are connected to each other via the first annular flow channel 65 of the flow coupling 61. A first part of the hydrogen return conduit 42 connected to the hydrogen production system 30 at the base of the wind turbine tower and a second part of the hydrogen return conduit 42 connected to the part of the hydrogen production system 30 at the nacelle are connected to each other via the second annular flow channel 66 of the flow coupling 61. In the closed loop cooling circuit 73 a cooling fluid may be circulated along the closed loop cooling conduit having one conduit guiding a cooling fluid from the tower to the nacelle and one conduit guiding cooling fluid from the nacelle back to the tower. A first part and a second part of each conduit of the closed loop cooling conduit may be connected via the third and fourth annular flow channels 67, 68.

As shown in Fig. 4, the water supply conduit 41, the hydrogen return conduit 42 and/or the closed loop cooling conduit of the closed loop cooling circuit 73 may extend at least partially through the wind turbine tower 103 and/or the nacelle 10. However, at least one part of these conduit may extend outside the nacelle and the wind turbine tower.

In another example, the rotatable flow coupling 61 may have only the annular flow channel 65, wherein the annular flow channel connects for example a first and second part of the water supply conduit or of the gas/liquid return conduit. In another example, the rotatable flow coupling 61 may have the two annular flow channels 65, 66, wherein the first annular flow channel 65 connects a first and second part of the water supply conduit and the second annular flow channel 66 connects a first and second part of the gas/liquid return conduit.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A wind turbine (100), comprising:
- a wind turbine tower (103),
- a nacelle (10) rotatably mounted to the wind turbine tower (103), wherein the nacelle (10) comprises at least part of a hydrogen production system (30), and
- a flow connection (52) for a fluid from the wind turbine tower (103) to the part of the hydrogen production system (30) in the nacelle (10), wherein the flow connection (52) comprises a rotatable flow coupling (61), and wherein the rotatable flow coupling (61) comprises:
- a first annular element (63) fixedly mounted to the wind turbine tower (103), and
- a second annular element (64) fixedly mounted to the nacelle (10),
wherein the second annular element (64) is rotatably connected to the first annular element (63), and wherein the rotatable flow coupling (52) has a rotation axis (B) that is coincident with the rotation axis of the nacelle (A).

2. The wind turbine according to claim 1, wherein the rotatable flow coupling (61) comprises a ring-shaped body (62) comprising or formed by the first and second annular elements (63, 64).

3. The wind turbine according to claim 2, wherein an inner diameter of the ring-shaped body (62) is in the range between 1.0-4.5 m, 1.3-4.0 m, 1.6-3.5 m, 1.8-3,0 m or 2.0-2.5 m.

4. The wind turbine according to claim 1, 2 or 3, wherein the rotatable flow coupling (61) is arranged outside of the wind turbine tower (103) such that the first and second annular elements (63, 64) surround the wind turbine tower (103) or an extension thereof, or
wherein the rotatable flow coupling (61) is arranged within an inner space of the wind turbine tower (103) or an extension thereof, and/or
wherein the rotatable flow coupling (61) is arranged in vertical direction within a predetermined distance range above and below a yaw bearing of the wind turbine (100) that rotatably connects the nacelle (10) with the wind turbine tower (103).

5. The wind turbine according to any of the preceding claims, wherein the first and second annular elements (63, 64) enclose between them a chamber forming at least one annular flow channel (65-68) from the wind turbine tower (103) to the nacelle (10), wherein the annular flow channel (65-68) is arranged coaxially to the rotation axis (B) of the rotatable flow coupling (61).

6. The wind turbine according to any of the preceding claims, wherein the rotatable flow coupling (61) comprises at least one annular flow channel (66 ,67) configured to guide water to an electrolyzer (31) of the part of the hydrogen production system or to guide hydrogen or a hydrogen/water mixture from the electrolyzer to the base (105) of the wind turbine tower.

7. The wind turbine according to any of the preceding claims, wherein the rotatable flow coupling (61), in particular the chamber of the rotatable flow coupling (61), comprises at least two, three, or four annular flow channels (65-68), wherein each annular flow channel (65-68) is configured to guide a fluid from the wind turbine tower (103) to the part of the hydrogen production system (30) in the nacelle (10) or vice versa, wherein preferably, the annular flow channels (65-68) of the rotatable flow coupling (61) are arranged coaxially with the rotation axis (B) of the rotatable flow coupling (61).

8. The wind turbine according to any of the preceding claims, wherein the rotatable flow coupling (61) comprises one or a combination of:
- an annular flow channel (65) configured to guide water from the wind turbine tower (103) to an electrolyzer (31) of the part of the hydrogen production system at the nacelle,
- an annular flow channel (66) configured to guide hydrogen or a hydrogen/water mixture from the electrolyzer (31) of the hydrogen production system at the nacelle to the wind turbine tower (103),
- an annular flow channel (67) configured to guide a cooling fluid from the wind turbine tower (103) to the electrolyzer (31), and
- an annular flow channel (68) configured to guide a cooling fluid from the electrolyzer (31) to the wind turbine tower (103).

9. The wind turbine according to any of the preceding claims, further comprising at least one annular sealing element which is arranged between the first and second annular elements (63, 64) coaxially to the rotation axis (B) of the rotatable flow coupling (61),
wherein the at least one annular sealing element is configured to provide a fluid tight rotatable seal between the first annular element and the second annular element (63, 64) .

10. The wind turbine according to any of the preceding claims, wherein the rotatable flow coupling (61) comprises at least one annular flow channel (65-68), wherein each of the at least one annular flow channel (65-68) comprises a first connection port (65a, 66a, 67a, 68a) arranged at the first annular element (63) and being fluidically connected to the respective annular flow channel (65-68) and a second connection port (65b, 66b, 67b, 68b) arranged at the second annular element (64) and being fluidically connected to the respective annular flow channel (65-68) so as to enable a fluid flow between the first and second connection ports (65a-68b).

11. The wind turbine according to any of the preceding claims, wherein the flow connection (52) comprises at least one of or a combination of:
- a water supply conduit (41) configured to supply water from the base (105) of the wind turbine tower to an electrolyzer (31) of the part of the hydrogen production system via the rotatable flow coupling (61),
- a hydrogen return conduit (42) configured to provide hydrogen from a separator (33) of the part of the hydrogen production system to the base (105) of the wind turbine tower or a hydrogen/water mixture from an electrolyzer (31) of the part of the hydrogen production system to a separator (33) of the hydrogen production system at the base (105) of the wind turbine tower via the rotatable flow coupling (61), and
- a closed loop cooling conduit of a closed loop cooling circuit (73) configured to circulate via the rotatable flow coupling (61), a cooling fluid between an electrolyzer (31) of the part of the hydrogen production system and the base (105) of the wind turbine tower, and wherein the closed loop cooling circuit is configured to cool the electrolyzer (31).

12. The wind turbine according to claim 9, wherein the water supply conduit (41), the hydrogen return conduit (42) and/or the closed loop cooling conduit of the closed loop cooling circuit (73) extend at least partially through the wind turbine tower (103) and/or the nacelle (10).

13. The wind turbine according to any of the preceding claims, wherein the part of the hydrogen production system (30) comprised by the nacelle comprises at least an electrolyzer (31) configured to receive electrical power from an electrical power generation system (20) of the wind turbine, wherein the electrolyzer is preferably arranged within a nacelle housing (11) of the nacelle or mounted to the nacelle outside of the nacelle housing.

14. The wind turbine according to any of the preceding claims, wherein one or more other components of the hydrogen production system are arranged at a base (105) of the wind turbine tower and/or within the wind turbine tower, and wherein the one or more other components include at least one or a combination of:
- a water treatment unit (32) having a desalination unit configured to desalinate seawater and to provide desalinated water to the electrolyzer (31) or to a water tank and/or a demineralization unit configured to demineralize seawater and to provide demineralized water to the electrolyzer or to a water tank,
- a pump arrangement (81) configured to pump water from the base of the wind turbine tower to the electrolyzer (31) arranged above the wind turbine tower,
- a cooling pump arrangement configured to circulate a cooling fluid (e.g. glycol) between the base of the wind turbine tower and the electrolyzer,
- a compressor unit (34) configured to compress gas produced by the electrolyzer, and
- electrical power and control equipment of said hydrogen production system.

15. A method of operating a wind turbine, wherein the wind turbine comprises:
- a wind turbine tower (103),
- a nacelle (10) rotatably mounted to the wind turbine tower (103), wherein the nacelle (10) comprises at least part of a hydrogen production system (30), and
- a flow connection (52) for a fluid from the wind turbine tower (103) to the part of the hydrogen production system (30) in the nacelle (10), wherein the flow connection (52) comprises a rotatable flow coupling (61), and wherein the rotatable flow coupling (61) comprises:
- a first annular element (63) fixedly mounted to the wind turbine tower (103), and
- a second annular element (64) fixedly mounted to the nacelle (10),
wherein the second annular element (64) is rotatably connected to the first annular element (63), and wherein the rotatable flow coupling (52) has a rotation axis (B) that is coincident with the rotation axis of the nacelle (A),
wherein the method comprises:
- operating the part of the hydrogen production system (30) at the nacelle, wherein a fluid is guided in the flow connection via the rotatable flow coupling (62) from the wind turbine tower (103) to the nacelle (10) and/or vice versa.
